Europäisches Patentamt

European Patent Office

Office européen des brevets

(19)

(11) Publication number: **0 105 417**
A2

(12) **EUROPEAN PATENT APPLICATION**

(21) Application number: 83109431.3

(22) Date of filing: 22.09.83

(51) Int. Cl.³: **F 02 D 35/02**

(30) Priority: 01.10.82 US 432195

(43) Date of publication of application:
18.04.84 Bulletin 84/16

(84) Designated Contracting States:
DE FR GB IT SE

(71) Applicant: Rockwell International Corporation
600 Grant Street
Pittsburgh Pennsylvania 15219(US)

(72) Inventor: Dozier, Leonard C.
1493 Yosemite
Birmingham Michigan 48008(US)

(74) Representative: Leiser, Gottfried, Dipl.-Ing. et al,
Patentanwälte Prinz, Bunke & Partner Ernsberger
Strasse 19
D-8000 München 60(DE)

(54) Method and apparatus for determining when a piston is at a particular location.

(57) The apparatus is used to determine an expected time for a piston to be positioned at a desired location within a cylinder of an internal combustion engine. The desired location can be related to the position of the crank arm which is connected to the piston and is needed for the initiation of an order from an engine control system to inject fuel into the cylinder, ignite fuel within the cylinder or the like. The apparatus includes a sensing element fixidly mounted relative to the cylinder for producing a first electrical signal when the piston is at a reference location prior to reaching an end location and for producing a second electrical signal when the piston is at the reference location after leaving the end location. The engine control system records the times of the electrical signals and calculates a time differential therebetween. The engine control system also calculates a total time interval of a cycle by determining an elapsed time between the piston being at the reference location during the cycle and being at the reference location during an immediately preceding cycle. An anticipated travel time interval is calculated as a product of the total time interval multiplied by the angle of rotation of the crank arm from the end position divided by a total angle of rotation of 360 degrees for a cycle. The engine control system algebraically adds one-half of the time differential and the anticipated travel time interval to the time of the first or the second electrical signal.

FIG. I

METHOD AND APPARATUS FOR DETERMINING WHEN
A PISTON IS AT A PARTICULAR LOCATION

Background of the Invention

Field of the Invention. This invention relates to an apparatus for determining the time that a piston which is connected to a rotating crank arm is at a particular location within a cylinder and the method for determining the same.

Description of the Prior Art. It is well known in the operation of internal combustion engines that a means must be provided for determining the desired time for injecting fuel into a cylinder, igniting fuel within a cylinder or the like, depending on the type of internal combustion engine and its operating parameters. For many years the determination of piston position was accomplished primarily by mechanical means such as timing chains, cams, distributors, etc. which were connected to a crank shaft driving the pistons.

However, with the introduction of electonic controls for engines, there remains a need for accurately providing piston information to an electronic engine control system without relying on mechanically driven devices associated with the crank shaft. Such an engine control system would include a microcomputer which would have a timing means, means for receiving predetermined electrical signals, means for recording and storing a time of receipt of each of such signals and means for doing basic calculations. For the engine control system to be able to properly initiate an ignition or injection order, it is essential that there is means for electrically providing accurate piston location information. The location and operation of an electrical piston position sensor for an electronic engine control system presents significant problems because of the high temperatures associated with the combustion chamber of such internal combustion engines and the requirement for highly accurate piston location information when ordering ignition or injection of fuel. There remains a need for apparatus which can conveniently, simply, and inexpensively determine piston location within a cylinder but does not require unusually fine tolerances during manufacture.

## Summary of the Invention

It is therefor an object of this invention to provide apparatus which is capable of determining the time that a piston is at a desired location within the cylinder.

It is another object to provide such apparatus which does not require fine manufacturing tolerances but is reliable and accurate.

These and other objects of the invention are provided in a preferred embodiment therefor including apparatus for determining a specific time that a piston which is connected to a rotating crank arm to reciprocate between opposite ends of travel within a cylinder is at one end location during a particular cycle of the piston within the cylinder. The specific time is needed for an engine control system of the type which includes timing means, means for receiving predetermined electrical signals, means for recording and storing a time of receipt of each of the electrical signals, and means for calculating. The apparatus includes sensing means which is fixedly mounted relative to the cylinder for producing a first of the electrical signals for the engine control system when the piston is at a reference location within the cylinder prior to reaching the one end location. The sensing means also produces a second of the electrical signals for the engine control system when the piston is at the reference location after leaving the one end location. The engine control system records a first time of the first electrical signal and a second time of the second electrical signal and calculates a time differential between the first time and the second time.  The engine control system algebraically adds one-half of the time differential to one of the first time and the second time to determine the specific time. Additionally, the apparatus can determine an expected time for the piston to be at a desired location within the cylinder during a particular cycle as may be needed for the initiation of an order from the engine control system to inject fuel into a cylinder, ignite fuel within the cylinder or the like.  The apparatus requires that the desired location be related to a desired angle of rotation of the crank arm from a first angular position when the piston is at one end location within the cylinder to a second angular position when the piston is at the desired location.  The engine control system is utilized to calculate a total time interval of a cycle by determining an elapsed time between the piston being at the reference location during the cycle and the piston being at the reference location during a corresponding cycle immediately preceding the cycle.  The engine control system calculates an anticipated travel time interval as a product of the total time interval multiplied by the desired angle of rotation divided by a total angle of rotation of 360 degrees for the cycle.  To determine the expected time, the engine control system algebraically adds the anticipated travel time interval to the specific time.

## Brief Description of the Drawings

Figure 1 is a schematic view of a piston-cylinder configuration including various features of the invention.

Figure 2 includes a graphic representation of the relationships between piston location, crank arm angle, sensor voltage signals and time to demonstrate various features of the invention.

## Detailed Description of the Preferred Embodiment

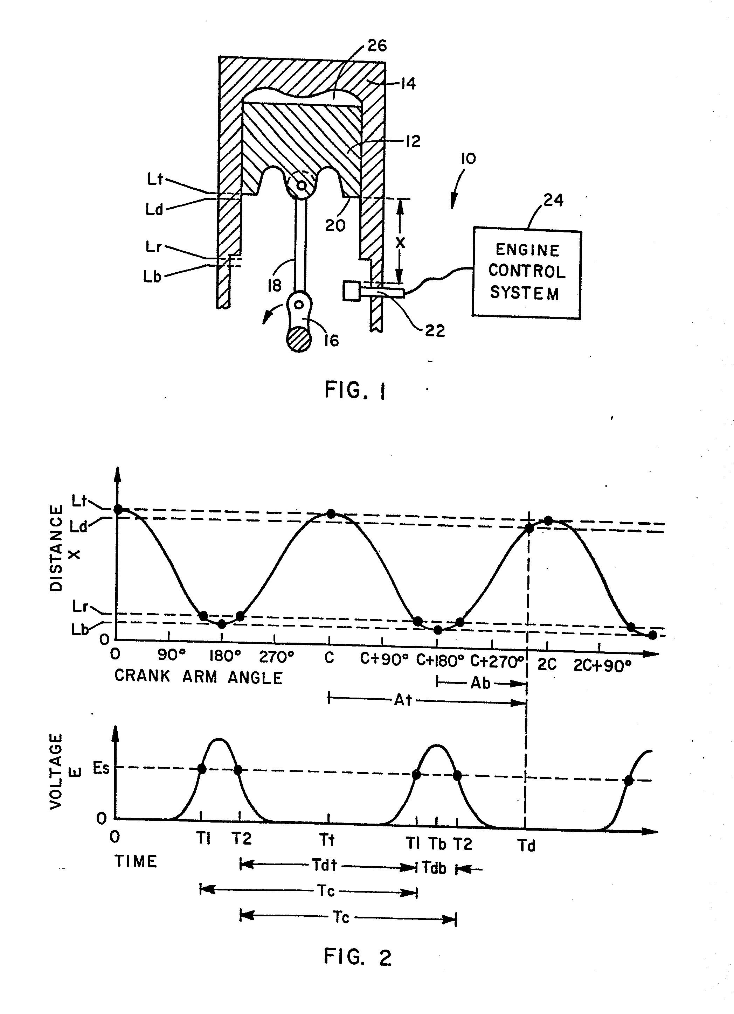

As seen in Figure 1, the preferred apparatus 10 is capable of determining the time that a piston 12 is at a particular location within a cylinder 14.  The piston 12 is connected to a crank arm 16 through a connecting rod 18 to cause it to reciprocate between opposite ends of travel within the cylinder 14.  Specifically, as shown in Figure 1, the bottom 20 of the piston 12 will be at a top end location Lt when the piston 12 is at its end of travel fully within the cylinder 14. At the other end of travel, the bottom 20 of the piston 12 will be at a bottom end location Lb.

A sensing device 22 of the preferred apparatus is fixedly mounted in the engine block to be generally aligned with the bottom 20 of the piston 12 with a varying linear distance X therebetween. The sensor 22 is of the type which can produce a voltage which varies inversely with the distance X to provide a basic signaling source for an engine control system 24 which is shown in block form in Figure 1. Since the sensing device 22 is located relative to the cylinder 14 toward the crank arm 16 and remote from the combustion chamber 26, it should not be subjected to extreme temperatures which could adversely affect its reliability.

The engine control system 24 is capable of initiating orders to cause injection of fuel into the combustion chamber 26, ignition of fuel in the combustion chamber 26 or the like, when the piston is at a desired location Ld depending on the specific type of internal combustion engine to be controlled. The engine control system 24 is basically preprogramed in a manner which is well known to those in the microcomputer art and many of the details thereof are outside of the scope of the present invention. However, there are certain features of the engine control system 24 which are necessary for the preferred apparatus to be capable of determining the time that the piston 12 is at a particular location within the cylinder 14. Specifically, the engine control system 24 must include a timing means and the basic capacity to perform calculations. Additionally, the engine control system 24 must be capable of receiving a series of predetermined electrical signals from the sensor 22 while being capable of recording and storing the time of receipt of each such electrical signal.

To fully understand the preferred apparatus 10 and the preferred method of determining the time that the piston 12 is at a particular location within the cylinder 14, it is best to refer to Figure 2 which graphically represents the relationships between piston location, crank arm angle, sensor voltage signals and time. The graphs of Figure 2 demonstrate the various occurrences which are present when the crank arm 16 rotates through two and one-half revolutions to cause the piston 12 to travel through two and one-half cycles. Throughout the representation in Figure 2, it is assumed that the engine is being operated at a constant speed. This limitation is for demonstration purposes only and various features of the invention relating to the increase or decrease of speed of the engine will be discussed in detail hereinbelow. At an initial reference time zero the piston is located at Lt with the crank arm angle being zero at the beginning of the first cycle. As time increases, the distance X decreases until the bottom 20 is sufficiently close to the sensing device 22 to start generating some voltage E. The sensitivity of the preferred sensing device 22 is such that there is no voltage E generated for the higher values of the distance X. However, as the crank arm 16 approaches 180 degrees, when the piston is at location Lb, the generated voltage E will increase to a maximum level. Further rotation of the crank arm 16 and a corresponding increase in the distance X will cause the voltage E to again decrease to zero. No voltage E will be generated by the movement of the piston 12 until it again begins to approach the location Lb in the second cycle.

It would appear from the explanation provided for the graphs of Figure 2 that one could simply determine the maximum voltage E and then directly be able to determine the time that the piston is located at Lb. However, one feature of the preferred apparatus and the preferred method recognizes that relying on the maximum generated voltage E would require a greater sensitivity and finer tolerances than is practically possible or desirable. Accordingly, rather than relying on the maximum generated voltage, the preferred apparatus establishes a signal voltage Es in the engine control system 24 to indicate a reference location Lr of the piston 12 within the cylinder 14. The actual distance X at location Lr or the actual crank arm angle when the piston is at the location Lr will be seen to be unimportant. Instead, it is only essential that it be recognized that the particular signal voltage Es will be generated by the movement of the piston 12 within the cylinder 14 when the piston 12 is first located at a reference location Lr as the piston is approaching the bottom location Lb and again when the piston is at the same reference location Lr after it has left the bottom location Lb.

Accordingly, since the reference locatin Lr and the related angle of the crank arm 16 is not critical, the particular distance X when the piston 12 is located at the reference location Lr is not critical. As a result, the preferred apparatus and the preferred method will be seen to allow a relatively wide range of tolerances for the specific location of the sensing device 22 relative to the cylinder 14. Similarly, the tolerances of the sensor itself and the expected voltages to be generated thereby need not be specifically rated to insure that a specific generated voltage E will be produced at a specific value for the distance X.

However, even though the signal voltage Es need not relate to a specific location of the piston 12 within the cylinder 14, the value of the signal voltage Es should not be arbitrarily selected. Preferably, the value of the signal voltage Es will be such that the generated voltage E will be changing at a maximum rate to improve the sensitivity and reliability of the preferred apparatus 10. Obviously, if one were to plot the expected voltage curve for a preferred sensing device 22 as a function of the crank arm angle and piston location, one could differentiate the curve and determine the region of greatest slope. For example, as seen in Figure 2, a typical sensor 22 would produce a greatest change in the generated voltage E when the piston was located at a reference location Lr which is produced by the crank arm being at about 18 degrees prior to the bottom location Lb and about 18 degrees after leaving the bottom location Lb.

The signal voltage Es is selected to correspond with the region of greatest change in generated voltage E and would indicate when the piston was at the reference location Lr. Therefore, although the specific distance X for the reference location Lr is not critical, it is preferable to insure that the resulting generated voltage E will be changing at a maximum rate at about the time it reaches a level of the signal voltage Es to improve the sensitivity of the apparatus and to insure that a more accurate determination of a specific reference location Lr is obtained throughout the varies cycles of the piston 12.

With the apparatus 10 being capable of providing a signal voltage Es which will accurately indicate that the piston is at the reference location Lr through the various cycles, the engine control system 24 will be programmed to provide both a specific time, Tt or Tb, for the piston to be at an end location, either location Lt or Lb, and an expected time Td for the piston to be at a desired location Ld for an injection or ignition order. Specifically, as the piston is first located at the reference location Lr, the engine control system 24 will note a first time Tl. After the piston is propelled by the crank arm beyond the crank arm angle 180 degrees, it will again be located at Lr and the engine control system 24 will note the second time T2. Similarly, for the second cycle at both sides of the crank arm angle position C+180 degrees a first time Tl and a second time T2 will be noted and stored in the engine control system 24.

From this information, the engine control system 24 will be programed and would be capable of determining the specific time that the piston is at either end location. For example, if the engine control system 24 needed the top time Tt that the piston was located at the top location Lt, the time differential at the top Tdt would initially be calculated. Specifically, the second time T2 during the first cycle would be subtracted from the first time Tl of the second cycle to obtain the differential time at the top Tdt. The differential time at the top Tdt would then be divided by 2 and algebraically added to either the second time T2 or the first time T1 as shown in Figure 2 to indicate the top time Tt therebetween.

Similarly as shown in Figure 2 for the second cycle, the time Tb for the piston to be at the bottom location Lb is designated. A time differential at the bottom Tdb requires the first time T1 for the second cycle to be subtracted from the second time T2 for the second cycle. Again, dividing the time differential at the bottom Tdb by 2 and algebraically adding this value to the first time T1 or the second time T2 will result in a specific determination of the bottom time Tb that the piston is at the bottom location Lb.

Additionally, from the basic recorded first time T1 for each cycle, the engine control system 24 will be capable of determining a total time interval of a cycle, Tc, by noting the difference between the first time T1 in one cycle and the first time T1 in the immediately preceding cycle. The same value for total time interval Tc could alternatively be obtained by taking the difference between the second time T2 for one cycle and the second time T2 for the immediately preceding cycle. Although the engine control system 24 would probably be programed to obtain the value of total time inteval Tc from either the first time T1 or the second time T2, it should be understood that either might obtain similar results.

Although as indicated hereinabove, Figure 2 is presented with the assumption that the piston, and thus the engine, is being operated at a constant speed, it should be understood that those skilled in the engine control art might wish to alter the value of total time interval Tc by taking into account the rate of increase or decrease in engine speed. The microcomputer could be designed and preprogrammed to record and evaluate a series of total time intervals Tc so that the specific total time interval for a particular cycle could be predicted from previous total time intervals Tc. Nevertheless, in the preferred apparatus 10 it is felt that the total time interval Tc for an immediately preceeding cycle would be accurate enough to be able to calculate an expected time Td for the piston to be at the desired location Ld.

Depending on the type of engine to be controlled, the desired location Ld is well known by those skilled in the engine control art. For example, as seen in Figure 2, the desired location Ld which would be utilized to initiate an order to ignite fuel would correspond to the piston location as it was approaching the top location Lt prior to the end 2C of the second cycle. The linear distance between the top location Lt and the desired location Ld would depend upon the piston stroke, compression ratio, etc. is shown to exist at about 20 degrees in crank arm angle prior to the end of the second cycle. It is not uncommon in the engine control art to relate the desired location Ld in terms of the angle of the crank arm. The angle of the crank arm can be expressed in a desired angle of rotation of the crank arm from a reference position when the piston is at one of the end locations. For example, if the bottom time Tb is to be utilized, angle of rotation Ab of the crank arm will be measured from the crank arm position when the piston is at bottom location Lb to the position it assumes when the piston is at the desired location Ld. If the top time Tt were to be utilized, the angle of rotation At of the crank arm would be measured from the position of the crank arm when the piston was at the top location Lt to the position it assumes when the piston is at the desired location Ld. For the example as shown in Figure 2, the angle of rotation Ab would be 160 degrees and the angle of rotation At would be 340 degrees.

For the constant speed as shown in Figure 2 or the small variation in speed occurring during a cycle, the elapsed time for the piston to travel from either the bottom location Lb or the top location Lt to the desired location Ld will be an anticipated travel time interval. The anticipated travel time can be assumed to be a product of the total time interval Tc multiplied by the desired angle of rotation (Ad or At) divided by a total angle of rotation of 360 degrees for the cycle. With this information in mind, it can be seen that the engine control system 24 should be capable of using the bottom time Tb to calculate the expected time Td for the piston to be located at the desired location Ld in the second cycle by performing the calculations as follows:

$$Td = Tb + \frac{Ab}{360} Tc;$$

$$\text{where } Tb = T2 - \frac{Tdb}{2} \text{ or } T1 + \frac{Tdb}{2}$$

Similarly, if the top time Tt were to be utilized, the expected time Td could alternatively be calculated as follows:

$$Td = Tt + \frac{At}{360} Tc;$$

$$\text{Where } Tt = T1 - \frac{Tdt}{2} \text{ or } T2^* + \frac{Tdt}{2}$$

and T2* is the second time T2 from the previous cycle

Accordingly, as shown in Figure 1 and 2, the preferred apparatus and method for determining expected time for a piston to be located at a desired location within the cylinder should be effective, reliable and accurate without requiring fine manufacturing tolerances or the need to locate any of the components thereof near the combustion chamber 26. It should be noted that, although the specific time Tb or Tt appears in the main formulas above, the microcomputer need not directly determine the specific time. If the time Tb or Tt is replaced by the formulas including the first time T1 or the second time T2, the internal clock in the microcomputer need not note or specifically record either Tb or Tt. The clock could be started at T1 or T2 and when the calculated time interval according to the formula has been allowed to pass, the expected time Td will have been reached.

Additionally, the preferred apparatus 10 and method as disclosed include other characteristics which are particularly attractive for the control of an engine. For example, if there is found to be any need for changing the desired location Ld for the injection of fuel into or ignition of fuel in the cylinder, the engine control system 24 could be simply altered electrically to provide a different desired location by electronically selecting a different desired angle of rotation to produce a corresponding change in the expected time Td. In fact, as is well known in the engine control art, there are some engines which are designed to require the ignition to be advanced when the engine is operated at higher speeds. With the basic information obtained for the total time interval Tc, the microcomputer for the engine control system 24 could evaluate the speed of the engine and could alter the desired angle of rotation in response to increases in speed to automatically advance the spark by varying the desired location Ld.

It should be clear from the description of the preferred embodiment provided hereinabove that any number of alterations can be made to the preferred embodiment without departing from the invention as claimed. For example, even if the pistons were made of aluminum, the preferred sensor could be employed by adding a ferrous ring or element at the base of the piston. Additionally, the sensor could be a different type or the sensor circuit could be altered to produce a different type of signal as long as the signal indicated each time the piston passed by a reference location for a determination of the time that the piston is at the end location therebetween. Obviously, there may be other information incorporated in the engine control system by those skilled in the engine control art for planned variations in the proper time for the ignition or injection of the fuel for reliable engine operation.

I Claim:

1. Apparatus for determining a specific time that a piston which is connected to a rotating crank arm to reciprocate between opposite ends of travel when a cylinder is at one end location during a particular cycle of said piston within said cylinder, said specific time being needed for an engine control system of the type which includes timing means, means for receiving predetermined electrical signals, means for recording and storing a time of receipt of each of said electrical signals, and means for calculating, said apparatus comprising:

sensing means fixedly mounted relative to said cylinder for producing a first of said electrical signals for said engine control system when said piston is at a reference location within said cylinder prior to reaching said one end location and for producing a second of said electrical signals for said engine control system when said piston is at said reference location after leaving said one end location;

said engine control system recording a first time of said first electrical signal and a second time of said second electrical signal;

said engine control system calculating a time differential between said first time and said second time; and

said engine control system algebraically adding one-half of said time differential to one of said first time and said second time.

2. The apparatus for determining a specific time as set forth in Claim 1, wherein said means for sensing is at a fixed mounting location toward said crank arm and remote from a combustion end of said cylinder.

3.    The apparatus for determining a specific time as set forth in Claim 2, wherein said means for sensing includes means for transmitting a voltage which varies inversely with a linear distance between said fixed mounting location and an end of said piston toward said crank arm.

4.    The apparatus for determining a specific time as set forth in Claim 3, wherein said voltage varies about a maximum rate when said piston is traveling though said reference location and said predetermined electrical signals correspond to a particular magnitude of voltage transmitted when said piston is at said reference location.

5. Apparatus for determining an expected time for a piston to be positioned at a desired location within a cylinder of an internal combustion engine, said piston being connected to a rotating crank arm to reciprocate between opposite ends of travel within said cylinder, said expected time of said piston to be at said desired location during a particular cycle being needed for initiation of an order from an engine control system to inject fuel into said cylinder, ignite fuel within said cylinder or the like, said desired location corresponding to a desired angle of rotation of said crank arm from a first angular position when said piston is at one end location within said cylinder to a second angular position when said piston is at said desired location, said engine control system being of the type which includes timing means, means for receiving predetermined electrical signals, means for recording and storing a time of receipt of each of said electrical signals, and means for calculating, said apparatus comprising:

    sensing means fixedly mounted relative to said cylinder for producing a first of said electrical signals for said engine control system when said piston is at a reference location within said cylinder prior to reaching said one end location and for producing a second of said electrical signals for said engine control system when said piston is at said reference location after leaving said one end location;

said engine control system recording a first time of said first electrical signal and a second time of said second electrical signal;

said engine control system calculating a time differential between said first time and said second time;

said engine control system calculating a total time interval of said cycle by determining an elapsed time between said piston being at said reference location during said cycle and said piston being at said reference location during a corresponding cycle immediately preceding said cycle;

said engine control system calculating an anticipated travel time interval as a product of said total time interval multiplied by said desired angle of rotation divided by a total angle of rotation of 360 degrees for said cycle; and

said engine control system algebraically adding one-half of said time differential and said anticipated travel time interval to one of said first time and said second time.

6. A method for determining a specific time that a piston which is connected to a rotating crank arm to reciprocate between opposite ends of travel when a cylinder is at one end location during a cycle of said piston within said cylinder, said method comprising the steps of:

sensing said piston at a reference location within said cylinder as said piston is approaching said one end location and recording a first time corresponding thereto;

sensing said piston at said reference location within said cylinder after said piston has left said one end location and recording a second time corresponding thereto;

determining a time differential between said first time and said second time; and

algebraically adding one-half of said time differential to one of said first time and said second time.

7. A method for determining an expected time that a piston which is connected to a rotating crank arm to reciprocate between opposite ends of travel within a cylinder will be at a desired location within said cylinder during a cycle of said piston within said cylinder, said desired location corresponding to a desired angle of rotation of said crank arm from a first angular position required when said piston is at one end location within said cylinder to a second angular position when said piston is at said desired location, said method comprising the steps of:

sensing said piston at a reference location within said cylinder as said piston is approaching said one end location and recording a first time corresponding thereto;

sensing said piston at said reference location within said cylinder after said piston has left said one end location and recording a second time corresponding thereto;

determining a total time interval of said cycle;

calculating an anticipated travel time interval as a product of said total time interval multiplied by said desired angle of rotation divided by a total angle of rotation of 360 degrees for said cylce;

determining a time differential between said first time and said second time;

algebraically adding one-half of said time differential and said anticipated travel time interval to one of said first time and said second time.

8. A method for determining an expected time as set forth in Claim 7, wherein said determining said total time interval of said cycle includes determining an elapsed time between said piston being at said reference location during said cycle and said piston being at said reference location during a corresponding cycle immediately preceding said cycle.

1 / 1

FIG. 1

FIG. 2